# EUROPÄISCHE PATENTSCHRIFT

(11) **EP 3 084 354 B1**
(45) Veröffentlichungstag und Bekanntmachung des Hinweises auf die Patenterteilung: **25.07.2018**
(21) Anmeldenummer: 14783596.1
(22) Anmeldetag: 08.10.2014
(51) Int. Cl.: G01D 11/24

(54) **MECHANISCH ÜBERBESTIMMT VERBAUTER DREHZAHLSENSOR MIT ELASTISCHER UMSPRITZUNG**
MECHANICALLY OVERSIZED ASSEMBLY FOR ROTATIONAL SPEED SENSOR
ASSEMBLAGE MÉCANIQUE SURDIMENSIONNÉ POUR CAPTEUR DE VITESSE DE ROTATION

(30) Priorität: 16.12.2013 DE 102013226045
(43) Veröffentlichungstag der Anmeldung: 26.10.2016
(73) Patentinhaber: Continental Teves AG & Co. oHG, 60488 Frankfurt (DE)
(72) Erfinder: GOLL, Manfred, 63695 Glauburg 2 (DE); SCHRADER, Ulrich, 61206 Wöllstadt (DE)
(86) Internationale Anmeldenummer: PCT/EP2014/071587
(87) Internationale Veröffentlichungsnummer: WO 2015/090664

(56) Entgegenhaltungen:
- WO-A1-03/081260
- DE-A1- 4 405 438
- DE-A1-102011 080 789
- US-A- 6 157 186
- US-A1- 2004 201 464
- US-A1- 2012 247 270

## Beschreibung

Die Erfindung betrifft einen Sensor zum Ausgeben eines von einer zu messenden Größe abhängigen Sensorsignals und ein Fahrzeug mit dem Sensor.
Aus der WO 2010 / 037 810 A1 ist ein Sensor zum Ausgeben eines von einer zu messenden Größe abhängigen Sensorsignals offenbart. Der Sensor umfasst einen an einer Verbindungsstelle mit einer Datenleitung elektrisch verbundenen Messaufnehmer, der eingerichtet ist, das von der messenden Größe abhängige Sensorsignal in die Datenleitung einzuspeißen, so dass das Sensorsignal über die Datenleitung ausgebbar ist. Ferner kann ein den Messaufnehmer und die Datenleitung wenigstens an einer Verbindungsstelle einhausendes Einbaugehäuse im Rahmen eines Kunststoffspritzgussvorgangs, "*transfer molding*" genannt, ausgebildet werden. Aus der WO 03 / 081260 A1 ist ein weiterer Sensor aus dem Stand der Technik bekannt. Es ist Aufgabe der Erfindung, den bekannten Sensor zu verbessern. Die Aufgabe wird durch die Merkmale der unabhängigen Ansprüche gelöst. Bevorzugte Weiterbildungen sind Gegenstand der abhängigen Ansprüche.

Gemäß einem Aspekt der Erfindung umfasst ein Sensor die Merkmale des Anspruchs 1. Das flexible Material kann dabei ein Material mit einem bestimmten Elastizitätsmodul sein. Die Flexibilität des Materials kann auch mittels eines Druckverformungsrestes vorgegeben werden. Dies ist die bleibende Verformung des Materials, die nach einer Verformung mit einer spezifischen Belastung über einen bestimmten Zeitraum und einer vorgegebenen Temperatur verbleibt. Als Prüfmethode kann beispielsweise die ASTM D395 herangezogen werden.
Dem angegebenen Sensor liegt Überlegung zugrunde, dass der Sensor als Raddrehzahlsensor über das Befestigungselement und das Einbaugehäuse an einem Achskörper eines Fahrzeuges befestigbar sein könnte, um die Raddrehzahl eines an dem Achskörper drehbar gelagerten Rades zu messen. Dabei könnte als Material für das Einbaugehäuse ein starres Material, wie beispielsweise ein Polyamid verwendet werden, um zu vermeiden, dass das Messaufnehmergehäuse und damit der Messaufnehmer mechanisch belastet wird und so aufgrund der mechanischen Belastung ein fehlerhaft von der zu messenden Größe abhängiges Sensorsignal ausgibt.
Ferner liegt dem angegebenen Sensor die Überlegung zugrunde, dass der Sensor mit einem derartig starren Einbaugehäuse mit einer vorbestimmten Einbautoleranz gegenüber einem Radlager im Achskörper befestigt werden muss, damit sich das Messaufnehmergehäuse nicht mit dem Radlager überschneidet und so mechanische Spannungen auf das Einbaugehäuse aufgebracht werden, die dann auf den Messaufnehmer wirken. Derartige mechanische Spannungen können beispielsweise durch Temperaturbewegungen der anderen Bauelemente entstehend und bringen auf das Einbaugehäuse Lastwechsel auf, die über die Lebensdauer des Gehäuses gesehen eine Anzahl von bis zu zwei Millionen erreichen können. Durch die Einbautoleranz wird jedoch ein Luftspalt zwischen dem Messaufnehmer und einem Geberelement gesteigert, was jedoch gleichzeitig den Toleranzbereich des Sensorsignals steigert und einen Lesebereich des Messaufnehmers einschränkt.

Hier greift der angegebene Sensor mit der Überlegung an, dass das Messaufnehmergehäuse selbst in der Regel aus einem starren Material gefertigt ist. Dieses starre Material schützt den Messaufnehmer vor den oben genannten mechanischen Belastungen. Daher kann das Einbaugehäuse aus einem flexiblen Material gefertigt sein, alle eventuell durch den Einbauzustand des angegebenen Sensors, beispielsweise in einem Fahrzeug, auftretenden mechanischen Belastungen aufnimmt und diese vom Messaufnehmergehäuse und damit vom Messaufnehmer fern hält. Damit lässt sich der Sensor frei von Einbautoleranzen verbauen, so dass der oben genannte Luftspalt reduziert und somit der Lesebereich des Messaufnehmers gesteigert und der Toleranzbereich des Sensorsignals gesenkt werden können.

In einer Weiterbildung des angegebenen Sensors ist das flexible Material ein Elastomer, das kostengünstig erhältlich ist, und in Massenfertigung verarbeitbar ist.

In einer besonderen Weiterbildung des angegebenen Sensors weist das Elastomer eine Härte von wenigstens 80 Shore A auf, uns ist somit geeignet neben der oben genannten Elastizität auch eine ausreichende Widerstandsfähigkeit gegenüber anderen mechanischen Belastungen bereitzustellen. Besonders bevorzugt können als Elastomer dabei thermoplastische Elastomere zum Einsatz kommen, die sich ab einer bestimmten Temperatur plastisch zu dem Einbaugehäuse verarbeiten lassen.
In einer anderen Weiterbildung des angegebenen Sensors erstreckt sich das Einbaugehäuse vom Messaufnehmergehäuse aus in einer Richtung der Datenleitung um die Datenleitung herum stabförmig. Wird der Sensor beispielsweise an dem oben genannten Achskörper des Fahrzeuges befestigt, so kann der Sensor an einer Außenseite des Achskörpers des Fahrzeuges befestigt und durch seine stabförmige Ausgestaltung des Einbaugehäuses über eine Öffnung in einen Innenraum des Achskörpers eingeführt sein. Erfindungsgemäß ist an dem Einbaugehäuse wenigstens eine Biegenut ausgebildet. Die Biegenut kann dabei derart angeordnet werden, dass das Einbaugehäuse eine Vorzugsbiegerichtung aufweist. Die Vorzugsbiegerichtung sollte dabei so festgelegt werden, dass das Einbaugehäuse mechanische Lasten zwischen zwei Montagepunkten des angegebenen Sensors aufnehmen kann, die an dem Befestigungselement und dem Messaufnehmergehäuse liegen. Auf diese Weise kann die bevorzugte mechanische Lastaufnahme durch das Einbaugehäuse gegenüber dem Messaufnehmergehäuse noch weiter gesteigert werden, wodurch die mechanischen Belastungen auf das Messaufnehmergehäuse und damit den Messaufnehmer weiter reduziert werden können. Besonders bevorzugt sind dabei mehr als eine Biegenut am Einbaugehäuse ausgebildet.
In einer bevorzugten Weiterbildung des angegebenen Sensors ist an dem Einbaugehäuse wenigstens zwei, achsensymmetrisch um die Datenleitung gelegte Quetschrippen ausgebildet sind, die durch die Sensoraufnahme verformbar sind. Auf diese Weise kann das elastische Material an der Sensoraufnahme durch Verquetschen der Sensoraufnahme versteift werden, wodurch der Sensor über das verquetschte und versteifte Einbaugehäuse an der Sensoraufnahme stabil gehalten wird.

In einer besonders bevorzugten Weiterbildung des angegebenen Sensors ist die Quetschrippe zwischen der Biegenut und dem Befestigungselement ausgebildet, so dass sichergestellt ist, dass die oben genannten mechanischen Lasten auch auf die Biegenut wirken und vom Messaufnehmergehäuse und damit vom Messaufnehmer fern gehalten werden.

Um das Ableiten der oben genannten mechanischen Lasten vom Messaufnehmergehäuse und damit vom Messaufnehmer noch weiter zu verbessern, kann in dem angegebenen Sensor die Datenleitung wenigstens im Bereich der Verbindungsstelle flexibel ausgebildet sein.

In einer besonders bevorzugten Weiterbildung des angegebenen Sensors kann das Messaufnehmergehäuse, das zweckmäßigerweise in der oben genannten Weise starr ausgeführt ist, aus einem Kunstharz, insbesondere aus einem Epoxidharz gefertigt sein.

Gemäß einem weiteren Aspekt der Erfindung umfasst ein Fahrzeug einen an einem Chassis befestigten Achskörper, ein am Achskörper über ein Radlager drehbar befestigtes Rad und einen der angegebenen Sensoren, dessen Befestigungselement und Messaufnehmergehäuse entsprechend am Achskörper beziehungsweise an einem ortsfest zum Achskörper stehenden Element des Radlagers befestigt ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
Fig. 1 eine schematische Ansicht eines Fahrzeuges mit einer Fahrdynamikregelung,
Fig. 2 eine schematische Schnittansicht einer Radaufhängung in dem Fahrzeug der Fig. 1,
Fig. 3 eine schematische Schnittansicht eines Drehzahlsensors in einem Einbauzustand an der Radaufhängung der Fig. 2,
Fig. 4 eine schematische Ansicht eines alternativen Drehzahlsensors, und
Fig. 5 eine schematische Ansicht eines weiteren alternativen Drehzahlsensors zeigen.

In den Figuren werden gleiche technische Elemente mit gleichen Bezugszeichen versehen und nur einmal beschrieben.

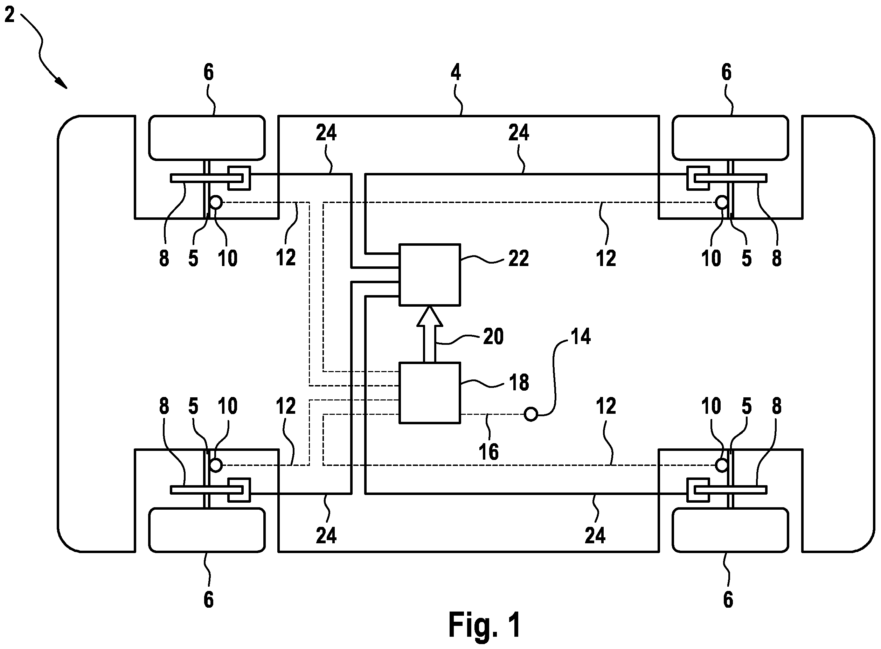

Es wird auf Fig. 1 Bezug genommen, die eine schematische Ansicht eines Fahrzeuges 2 mit einer an sich bekannten Fahrdynamikregelung zeigt. Details zu dieser Fahrdynamikregelung können beispielsweise der DE 10 2011 080 789 A1 entnommen werden.

Das Fahrzeug 2 umfasst ein Chassis 4 und vier Räder 6, die über je eine Radaufhängung 5 an dem Chassis 4 drehbar gehalten sind. Jedes Rad 6 kann über eine ortsfest am Chassis 4 befestigte Bremse 8 gegenüber dem Chassis 4 verlangsamt werden, um eine Bewegung des Fahrzeuges 2 auf einer nicht weiter dargestellten Straße zu verlangsamen.

Dabei kann es in einer dem Fachmann bekannten Weise passieren, dass das die Räder 6 des Fahrzeugs 2 ihre Bodenhaftung verlieren und sich das Fahrzeug 2 sogar von einer beispielsweise über ein nicht weiter gezeigtes Lenkrad vorgegebenen Trajektorie durch Untersteuern oder Übersteuern wegbewegt. Dies wird durch an sich bekannte Regelkreise wie ABS (Antiblockiersystem) und ESP (elektronisches Stabilitätsprogramm) vermieden.

In der vorliegenden Ausführung weist das Fahrzeug 2 dafür Drehzahlsensoren 10 an den Rädern 6 auf, die eine Drehzahl 12 der Räder 6 erfassen. Ferner weist das Fahrzeug 2 einen Inertialsensor 14 auf, der Fahrdynamidaten 16 des Fahrzeuges 2 erfasst aus denen beispielsweise eine Nickrate, eine Wankrate, eine Gierrate, eine Querbeschleunigung, eine Längsbeschleunigung und/oder eine Vertikalbeschleunigung in einer dem Fachmann an sich bekannten Weise ausgegeben werden kann.

Basierend auf den erfassten Drehzahlen 12 und Fahrdynamikdaten 16 kann ein Regler 18 in einer dem Fachmann bekannten Weise bestimmen, ob das Fahrzeug 2 auf der Fahrbahn rutscht oder sogar von der oben genannten vorgegebenen Trajektorie abweicht und entsprechen mit einem an sich bekannten Reglerausgangssignal 20 darauf reagieren. Das Reglerausgangssignal 20 kann dann von einer Stelleinrichtung 22 verwendet werden, um mittels Stellsignalen 24 Stellglieder, wie die Bremsen 8 anzusteuern, die auf das Rutschen und die Abweichung von der vorgegebenen Trajektorie in an sich bekannter Weise reagieren.

Der Regler 18 kann beispielsweise in eine an sich bekannte Motorsteuerung des Fahrzeuges 2 integriert sein. Auch können der Regler 18 und die Stelleinrichtung 22 als eine gemeinsame Regeleinrichtung ausgebildet und optional in die zuvor genannte Motorsteuerung integriert sein.

Anhand des in Fig. 1 gezeigten Raddrehzahlsensors 10 soll die vorliegende Erfindung näher verdeutlicht werden, auch wenn die vorliegende Erfindung an beliebigen elektronischen Vorrichtungen und insbesondere an beliebigen Sensoren, wie Magnetfeldsensoren, Beschleunigungssensoren, Drehratensensoren, Körperschallsensoren oder Temperatursensoren umsetzbar ist.

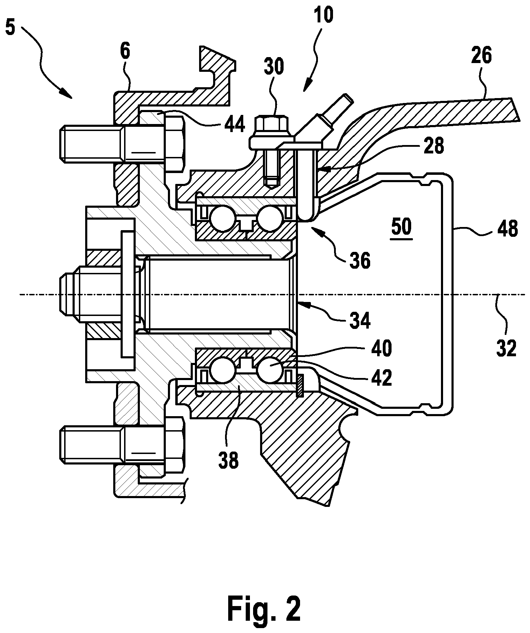

Es wird auf Fig. 2 Bezug genommen, die eine schematische Schnittansicht einer der Radaufhängungen 5 in dem Fahrzeug 2 der Fig. 1 zeigt.

Die Radaufhängung 5 weist einen Achskörper 26 auf, der gegenüber dem Rad 6 drehfest und gegebenenfalls über eine Lenkung auslenkbar am Chassis 4 befestigt ist. Durch den Achskörper 26 ist eine Aufnahmeöffnung 28 ausgebildet, durch die der entsprechend an der Radaufhängung 5 angeordnete Drehzahlsensor 10 geführt ist. Auf Details zu diesem Drehzahlsensor 10 wird an späterer Stelle eingegangen. Der Drehzahlsensor 10 ist über eine Schraube 30 an dem Achskörper 26 befestigt.

Der Achskörper 26 weist eine konzentrisch um eine Rotationsachse 32 verlaufende Innenbohrung 34 auf, in der ein Radlager 36 gehalten ist. Das Radlager 36 ist in der vorliegenden Ausführung als Radlager zweiter Generation ausgeführt. Derartige Radlager sind technisch einschlägig beispielsweise aus der DE 195 37 808 A1 bekannt, weshalb auf ihre Funktion nachstehend nicht weiter eingegangen werden soll.

Das Radlager 36 umfasst einen in der Innenbohrung 34 des Achskörpers 26 drehfest gehaltenen Außenring 38 und einen Innenring 40, der über Wälzelemente 42 drehbar gegenüber dem Innenring gehalten ist. Am Innenring 40 erstreckt sich axial ein Radflansch 44, an dem über Schrauben 30 befestigt, das Rad 6 gehalten sein kann.

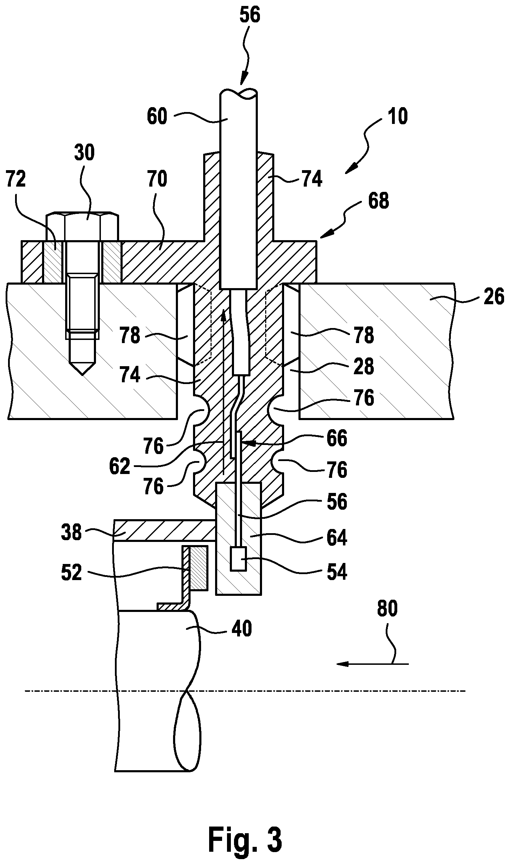

Auf der dem Radflansch 44 axial gegenüberliegenden Seite des Radlagers 36 ist die Innenbohrung 34 des Achskörpers 26 mit einer Kappe 48 abgedeckt, so dass ein Raum 50 ausgebildet ist, in den der Sensor 10 eingeführt ist. Hierbei kann der Drehzahlsensor 10 axial sehr nahe an den Innenring 40 herangeführt werden, an dem sich in der Regel ein in Fig. 3 gezeigter Encoder 52 befindet, der ein für den Drehzahlsensor 10 auswertbares magnetisches Geberfeld erregt. Der Encoder 52 kann dabei optional zum Drehzahlsensor 10 hinzugezählt werden.

Es wird auf Fig. 3 Bezug genommen, die eine schematische Schnittansicht des Drehzahlsensors 10 in einem Einbauzustand an der Radaufhängung 5 der Fig. 2 zeigt.

Der Drehzahlsensor 10 weist einen Messaufnehmer 54 und eine Datenleitung 56 auf, die in der vorliegenden Ausführung als Pins 58 und als an die Pins 58 angeschlossenes Datenkabel 60 ausgeführt ist. Das Datenkabel 60 kann an den Regler 18 angeschlossen werden, während die Pins 58 an den Messaufnehmer 54 abgeschlossen sind, so dass ein, die Drehzahl 12 führendes Drehzahlsignal 62 vom Messaufnehmer 60 über die Pins 58 und das Datenkabel 60 an den Regler 18 zur oben gennannten Verarbeitung der Drehzahl 12 geleitet werden kann.

Der Messaufnehmer 54 ist in der vorliegenden Ausführung in einem starren Messaufnehmergehäuse 64 aufgenommen, das beispielsweise aus einem Epoxyharz gefertigt sein kann. Aus diesem Messaufnehmergehäuse 64 sind die Pins 58 herausgeführt. An einer elektrischen Anschlussstelle 66, an der das Datenkabel 60 mit den Pins 58 elektrisch verbunden ist, sind die Pins 58, das Datenkabel 60 und das Messaufnehmergehäuse 64 von einem Einbaugehäuse 68 eingehüllt. Das Einbaugehäuse kann beispielsweise aus einem thermoplastischen Material durch Umspritzen um das Datenkabel 60 und das Messaufnehmerkehäuse 64 gefertigt sein.

Das thermoplastische Material sollte eine Härte von mindestens 80 Shore A aufweisen.

Dieses Einbaugehäuse 68 weist eine Auflagescheibe 70 auf, durch die ein Befestigungselement 72 geführt ist, durch das die Schraube 30 geführt werden kann. Gleichzeitig kann die Auflagescheibe 70 auf der, vom Raum 50 aus gesehenen Außenseite des Achskörpers 28 aufgelegt werden, so dass der Drehzahlsensor 10 nach dem Einschrauben der Schraube 30 sicher auf dem Achskörper 28 gehalten wird.

Von der Anschlussscheibe 70 erstreckt sich in Richtung der Datenleitung 56 durch die Aufnahmeöffnung 28 hindurch ein stabförmiger Vorsprung 74, durch den die Datenleitung 56 geführt ist. Dieser stabförmige Vorsprung 74 hüllt auch teilweise das Messaufnehmergehäuse 64 ein. Der stabförmige Vorsprung 74 kann sich dabei auch von der Anschlussscheibe 70 auf einer der Aufnahmeöffnung 28 gegenüberliegenden Seite erstrecken.

In dem stabförmigen Vorsprung 74 sind auf der Seite der Aufnahmeöffnung 28 Biegenuten 76 ausgebildet, die den stabförmigen Vorsprung 74 an dieser Stelle schwächen, so dass er an diesen Stellen leichter biegbar ist. Im in Fig. 2 und 3 gezeigten Einbauzustand weist der Drehzahlsensor 10 zwei mechanische Befestigungspunkte im Fahrzeug 2 auf. Einmal ist der Drehzahlsensor 10 mit seiner Anschlussscheibe 70 am Achskörper 26 befestigt. Ferner liegt der Drehzahlsensor 10 mit dem Messaufnehmergehäuse 64 fest am Außenring 38 des Radlagers 36 an. Bewegt sich der Außenring 38 des Radlagers 36 beispielsweise aufgrund von Wärmebewegungen, so wird der Drehzahlsensor 10 aufgrund der Wärmebewegungen in erster Linie an den Biegenuten 76 des stabförmigen Vorsprung 74 verformt. Der Messaufnehmer 54 bleibt aufgrund des starren Messaufnehmergehäuses 64 weitestgehend mechanisch spannungsfrei.

Um dem Drehzahlsensor 10 in der Aufnahmeöffnung 28 am stabförmigen Vorsprung 74 einen festen Halt zu bieten, ist am stabförmigen Vorsprung 74 im Bereich des Ansatzes an die Anschlussscheibe 70 ein Bund 77 ausgebildet, an den sich axial mehrere Quetschrippen 78 anschließen, die umfänglich um den stabförmigen Vorsprung 74 gelegt sind. Beim Einsetzen des stabförmigen Vorsprungs 74 in die Aufnahmeöffnung 28 wird der Drehzahlsensor 10 durch den Bund 77 zunächst radial zentriert. Wird der stabförmige Vorsprung 74 weiter in die Aufnahmeöffnung 28 eingeschoben, werden die Quetschrippen 78 durch Verquetschen verformt, so dass der Drehzahlsensor 10 auch innerhalb der Aufnahmeöffnung 28 fest am Achskörper 26 anliegt. Darüber hinaus können die Quetschrippen 78 mechanische Spannungen aus dem Achskörper 26 aufnehmen, wie sie beispielsweise durch Wärmebewegungen des Achskörpers 26 auftreten können, so dass der gesamtelastische Effekt des Drehzahlsensors 10 weiter gesteigert wird.

Während die Quetschrippen 78 am stabförmigen Vorsprung 74 axial geführt und umfänglich um diesen gelegt sein können, können die Biegenuten 76 beispielsweise in einer zum Innenring 38 hingerichteten Richtung 80 und in der Gegenrichtung in dem stabförmigen Vorsprung 74 ausgebildet sein, um einerseits eine hohe Stabilität des stabförmigen Vorsprungs 74 zu gewährleisten, aber auch eine hohe Biegefähigkeit des stabförmigen Vorsprungs 74 zu realisieren.

Durch die zuvor genannte Ausführung des Drehzahlsensors 10 kann dieser an verschiedenen Punkten im Fahrzeug 2 befestigt werden, ohne dass Wärmebewegungen der Elemente im Fahrzeug 2 und damit hervorgerufene Lastwechsel auf den Drehzahlsensor 10 zu mechanischen Belastungen auf den Messaufnehmer 54 führen und die gemessene Drehzahl 12 in dem Drehzahlsignal 62 verfälschen.

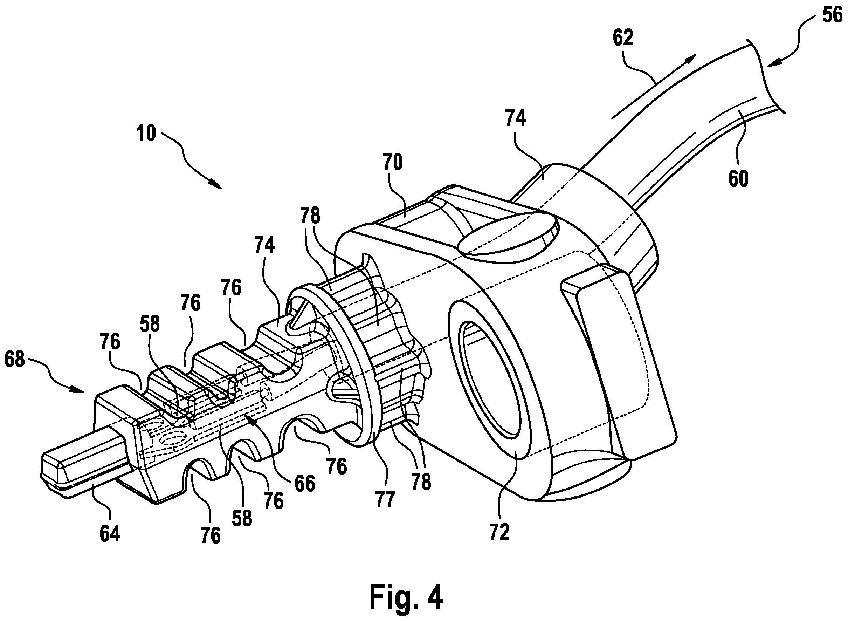

Es wird auf Fig. 4 Bezug genommen, die eine schematische Ansicht eines zum Drehzahlsensor 10 der Fig. 3 alternativen Drehzahlsensors 10 in einem nicht in das Fahrzeug 2 eingebauten Zustand gezeigt.

Der Drehzahlsensor der Fig. 3 weist statt vier Biegenuten 76 sechs Biegenuten 76 auf. Auf diese Weise lässt sich die Flexibilität des stabförmigen Vorsprungs weiter steigern.

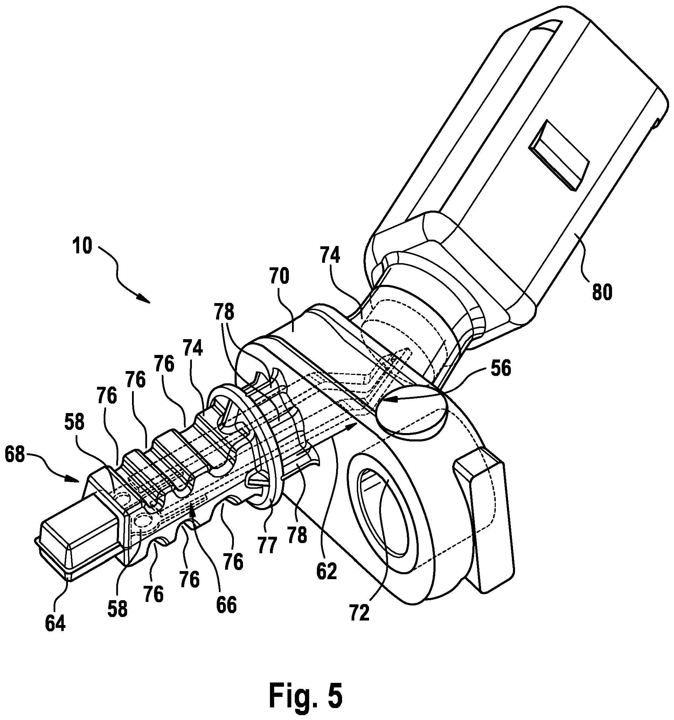

Es wird auf Fig. 5 Bezug genommen, die eine schematische Ansicht eines weiteren alternativen Drehzahlsensors 10 zeigt.

Der Drehzahlsensor 10 der Fig. 5 entspricht im Wesentlichen dem Drehzahlsensor 10 der Fig. 4 wobei die Pins 58 statt mit einem Kabel mit einer Steckdose 80 elektrisch kontaktiert sind, in der ein nicht weiter dargestellter Stecker aufgenommen werden kann. Dieser Stecker kann dann wiederrum an ein entsprechendes zum Regler 18 führendes Datenkabel angeschlossen sein.

## Patentansprüche

1. Sensor (10) zum Ausgeben eines von einer zu messenden Größe (12) abhängigen Sensorsignals (62), umfassend
- einen an einer Verbindungsstelle (66) mit einer Datenleitung (56) elektrisch verbundenen und in einem Messaufnehmergehäuse (64) eingehausten Messaufnehmer (54), der eingerichtet ist, das von der messenden Größe (12) abhängige Sensorsignal (62) in die Datenleitung (56) einzuspeisen, sodass das Sensorsignal (62) über die Datenleitung (56) ausgebbar ist,
- ein das Messaufnehmergehäuse (64) und die Datenleitung (56) wenigstens an der Verbindungsstelle (66) einhausendes Einbaugehäuse (68), das aus einem flexiblen Material gefertigt ist und
- ein mit dem Einbaugehäuse (68) fest verbundenes Befestigungselement (72) zum Befestigen des Einbaugehäuses (68) an einer Sensoraufnahme (26), wobei das Messaufnehmergehäuse (64) und das Befestigungselement (72) an zwei gegenüberliegenden Seiten des Einbaugehäuses (68) angeordnet sind,
**dadurch gekennzeichnet, dass** an dem Einbaugehäuse (68) wenigstens eine Biegenut (76) ausgebildet ist.

2. Sensor (10) nach Anspruch 1, wobei das flexible Material ein Elastomer ist.

3. Sensor (10) nach Anspruch 2, wobei das Elastomer eine Härte von wenigstens 80 Shore A aufweist.

4. Sensor (10) nach einem der vorstehenden Ansprüche, wobei sich das Einbaugehäuse (56) vom Messaufnehmergehäuse (64) aus in einer Richtung der Datenleitung um die Datenleitung (56) herum stabförmig erstreckt.

5. Sensor (10) nach einem der vorstehenden Ansprüche, wobei an dem Einbaugehäuse (68) wenigstens zwei, achsensymmetrisch um die Datenleitung (56) gelegte Quetschrippen (78) ausgebildet sind, die durch die Sensoraufnahme (28) verformbar sind.

6. Sensor (10) nach Anspruch 5, wobei die Quetschrippe (78) zwischen der Biegenut (76) und dem Befestigungselement (72) ausgebildet ist.

7. Sensor (10) nach einem der vorstehenden Ansprüche, wobei die Datenleitung (56) wenigstens im Bereich der Verbindungsstelle (66) flexibel ausgebildet ist.

8. Sensor (10) nach einem der vorstehenden Ansprüche, das Messaufnehmergehäuse (64) aus einem Kunstharz, insbesondere aus einem Epoxidharz gebildet ist.

9. Fahrzeug (2) umfassend einen an einem Chassis (4) befestigten Achskörper (26), ein am Achskörper (26) über ein Radlager (36) drehbar befestigtes Rad (10) und einen Sensor (10) nach einem der vorstehenden Ansprüche, dessen Befestigungselement (72) und Messaufnehmergehäuse (64) entsprechend am Achskörper (26) beziehungsweise an einem ortsfest zum Achskörper (26) stehenden Element (38) des Radlagers (36) befestigt ist.

## Claims

1. Sensor (10) for outputting a sensor signal (62) which is dependent on a variable (12) which is to be measured, comprising
- a measurement pickup (54) which is electrically connected to a data line (56) at a connection point (66), is housed in a measurement pickup housing (64) and is designed to feed the sensor signal (62) which is dependent on the variable (12) which is to be measured into the data line (56), so that the sensor signal (62) can be output via the data line (56),
- an installation housing (68) which houses the measurement pickup housing (64) and the data line (56) at least at the connection point (66) and is produced from a flexible material, and
- a fastening element (72), which is fixedly connected to the installation housing (68), for fastening the installation housing (68) to a sensor receptacle (26), wherein the measurement pickup housing (64) and the fastening element (72) are arranged on two opposite sides of the installation housing (68),
**characterized in that** at least one bending groove (76) is formed on the installation housing (68).

2. Sensor (10) according to Claim 1, wherein the flexible material is an elastomer.

3. Sensor (10) according to Claim 2, wherein the elastomer has a Shore A hardness of at least 80.

4. Sensor (10) according to one of the preceding claims, wherein the installation housing (68) extends from the measurement pickup housing (64) in a direction of the data line around the data line (56) in the manner of a rod.

5. Sensor (10) according to one of the preceding claims, wherein at least two crushing ribs (78) which are placed in an axially symmetrical manner around the data line (56) and can be deformed by the sensor receptacle (28) are formed on the installation housing (68) .

6. Sensor (10) according to Claim 5, wherein the crushing rib (78) is formed between the bending groove (76) and the fastening element (72).

7. Sensor (10) according to one of the preceding claims, wherein the data line (56) is flexible at least in the region of the connection point (66).

8. Sensor (10) according to one of the preceding claims, wherein the measurement pickup housing (64) is formed from a synthetic resin, in particular from an epoxy resin.

9. Vehicle (2) comprising an axle body (26) which is fastened to a chassis (4), a wheel (6) which is fastened in a rotatable manner to the axle body (26) by means of a wheel bearing (36), and a sensor (10) according to one of the preceding claims, the fastening element (72) and the measurement pickup housing (64) of said sensor correspondingly being fastened to the axle body (26) or to an element (38) of the wheel bearing (36), said element being fixed in position in relation to the axle body (26).

## Revendications

1. Capteur (10) destiné à délivrer un signal de capteur (62) dépendant d'une grandeur (12) à mesurer, comprenant
- un capteur de mesure (54) qui est relié électriquement à une ligne de données (56) en un point de liaison (66) et logé dans un boîtier de capteur de mesure (64) et qui est conçu pour injecter le signal de capteur (62), dépendant de la grandeur (12) à mesurer, dans la ligne de données (56) afin que le signal de capteur (62) puisse être délivré par l'intermédiaire de la ligne de données (56),
- un boîtier de montage (68) logeant le boîtier de capteur de mesure (64) et la ligne de données (56) au moins au niveau du point de liaison (66), et qui est fabriqué à partir d'un matériau flexible, et
- un élément de fixation (72) relié solidairement au boîtier de montage (68) et servant à fixer le boîtier de montage (68) à un logement de capteur (26), dans lequel le boîtier de capteur de mesure (64) et l'élément de fixation (72) sont disposés sur deux côtés opposés du boîtier de montage (68),
**caractérisé en ce qu'**au moins une rainure de flexion (76) est réalisée sur le boîtier de montage (68).

2. Capteur (10) selon la revendication 1, dans lequel le matériau flexible est un élastomère.

3. Capteur (10) selon la revendication 2, dans lequel l'élastomère présente une dureté d'au moins 80 Shore A.

4. Capteur (10) selon l'une des revendications précédentes, dans lequel le boîtier de montage (56) s'étend en forme de tige à partir du boîtier de capteur de mesure (64) dans une direction de la ligne de données en entourant la ligne de données (56).

5. Capteur (10) selon l'une des revendications précédentes, dans lequel au moins deux nervures de pincement (78) disposées de manière axialement symétrique autour de la ligne de données (56) et déformables par le logement de capteur (28) sont réalisées sur le boîtier de montage (68).

6. Capteur (10) selon la revendication 5, dans lequel la nervure de pincement (78) est réalisée entre la rainure de flexion (76) et l'élément de fixation (72) .

7. Capteur (10) selon l'une des revendications précédentes, dans lequel la ligne de données (56) est réalisée de manière flexible au moins dans la zone du point de liaison (66).

8. Capteur (10) selon l'une des revendications précédentes, dans lequel le boîtier de capteur de mesure (64) est constitué d'une résine synthétique, en particulier d'une résine époxy.

9. Véhicule (2) comprenant un corps d'essieu (26) fixé à un châssis (4), une roue (10) fixée à rotation sur le corps d'essieu (26) par l'intermédiaire d'un palier de roue (36) et un capteur (10) selon l'une des revendications précédentes, dont l'élément de fixation (72) et le boîtier de capteur de mesure (64) sont fixés de manière correspondante sur le corps d'essieu (26) ou sur un élément (38) du palier de roue (36) stationnaire par rapport au corps d'essieu (26).
